# EUROPÄISCHE PATENTSCHRIFT

(11) **EP 2 826 457 B1**
(45) Veröffentlichungstag und Bekanntmachung des Hinweises auf die Patenterteilung: **04.05.2016**
(21) Anmeldenummer: 13176663.6
(22) Anmeldetag: 16.07.2013
(51) Int. Cl.: A61J 1/06, A61J 1/14

(54) **Ampulle für eine medizinische Flüssigkeit und Verfahren zum Herstellen einer Ampulle**
Vial for a medical liquid and method for manufacturing a vial
Ampoule pour un liquide médical et procédé de fabrication d'une ampoule

(43) Veröffentlichungstag der Anmeldung: 21.01.2015
(73) Patentinhaber: Fresenius Kabi Deutschland GmbH, 61352 Bad Homburg (DE)
(72) Erfinder: Brandenburger, Torsten, 61203 Dorn-Assenheim (DE)
(74) Vertreter: Fresenius Kabi Deutschland GmbH

(56) Entgegenhaltungen:
- WO-A1-02/00160
- WO-A1-2010/034470
- WO-A1-2011/001275

## Beschreibung

Die Erfindung betrifft eine Ampulle für eine medizinische Flüssigkeit nach dem Oberbegriff des Anspruchs 1 sowie ein Verfahren zum Herstellen einer Ampulle für eine medizinische Flüssigkeit.

Eine derartige Ampulle umfasst einen Ampullenkörper zum Aufnehmen einer medizinischen Flüssigkeit, beispielsweise einer Infusionslösung, und ein Anschlussteil zum Anschließen einer Entnahmeeinrichtung, z. B. einer Spritze, an die Ampulle.

Eine derartige Ampulle dient beispielsweise zum Aufbewahren eines medizinischen Wirkstoffs, insbesondere eines Medikaments oder einer anderen Flüssigkeit, die für medizinische Zwecke zum Einsatz kommt, beispielsweise Magnesium, Kalziumchlorid, Kaliumchlorid, Natriumchlorid, Glukose, steriles Wasser, Nährstoffe für die parenterale Ernährung oder dergleichen.

Solche Ampullen, wie sie beispielsweise aus der US 4,671,763 und der WO 2011/075 798 A1 bekannt sind, werden heutzutage, sofern sie aus Kunststoff gefertigt werden, üblicherweise mittels des sogenannten Blow-Fill-Seal-Verfahrens (BFS) hergestellt. Beim Blow-Fill-Seal-Verfahren handelt es sich um ein Verfahren, das insbesondere zum Herstellen von Behältnissen zum Aufnehmen von Flüssigkeiten zum Einsatz kommt. Beim Blow-Fill-Seal-Verfahren wird ein Behältnis in einem durchgehenden Prozess in einer gegebenenfalls sterilen, abgeschlossenen Umgebung innerhalb einer Maschine geformt, befüllt und verschlossen, ohne dass hierfür ein Eingriff durch einen Bediener erforderlich ist. Im Rahmen des Blow-Fill-Seal-Verfahrens wird in der Regel ein Kunststoffwerkstoff vertikal extrudiert, um einen rohrförmigen Abschnitt herzustellen, der sodann in einem Werkzeug geformt und befüllt und anschließend verschlossen wird. Aufgrund der Formung des Behältnisses in einer sterilen Umgebung eignet sich das Blow-Fill-Seal-Verfahren insbesondere zum Herstellen von Ampullen zum Aufbewahren medizinischer Flüssigkeiten.

In der WO 02/00160 A1 ist eine Vorrichtung zum Ausgießen mit einer Kanüle dargestellt.

Die WO 2011/001275 A1 beschreibt einen Behälter, insbesondere einen Einzeldosis-Behälter, aus einem Zweikomponenten-Kunststoffmaterial für kosmetische, dermatologische und pharmazeutische Zubereitungen. Der Behälter wird bereitgestellt durch einen aus einem monolithischen Körper gebildeten hohlen Teil aus einem weichen Kunststoffmaterial und durch ein Kappenteil aus einem harten Kunststoffmaterial. Die beiden Teile werden in einem Formwerkzeug hergestellt.

In der WO 2010/034470 A1 ist ein Anschlussteil mit einer Membran zum Anschluss einer Spritze an einen Beutel, an eine Flasche oder an eine Schlauchleitung beschrieben. Im Fall des Beutels ist das Anschlussteil über einen Anschlussstutzen mit dem Beutel verbunden. Im Fall der Flasche wird der Konnektor als Bestandteil einer Verschlusskappe, die mit der Flasche verbunden ist, bereitgestellt.

Herkömmliche Ampullen weisen häufig keine Bodenfläche auf, auf die sie gestellt werden könnten. Zudem kann bei herkömmlichen Ampullen, wenn eine Flüssigkeit entnommen wird, ein Rückpumpverhalten auftreten, das durch die Rückstellung der Wandungen des Ampullenkörpers bewirkt wird und dazu führt, dass Flüssigkeit zurück in die Ampulle gesogen wird.

Aufgabe der vorliegenden Erfindung ist es, eine Ampulle sowie ein Verfahren zum Herstellen einer Ampulle bereitzustellen, die eine einfache und kostengünstige Verstellung der Ampulle ermöglichen und eine sterile Aufbewahrung einer medizinischen Flüssigkeit gewährleisten können.

Diese Aufgabe wird durch einen Gegenstand mit den Merkmalen des Anspruchs 1 und durch ein Verfahren mit den Merkmalen des Anspruchs 13 gelöst.

Demnach ist der Ampullenkörper als Kunststoffspritzgussteil mittels Kunststoffspritzgießen hergestellt.

Als Kunststoffspritzgießen (oft auch als Spritzguss oder Spritzgussverfahren bezeichnet) wird ein Urformverfahren verstanden, bei dem ein Kunststoffwerkstoff mit einer Spritzgießmaschine in einer Spritzeinheit plastifiziert und in ein Spritzgießwerkzeug eingespritzt wird. Ein im Spritzgießwerkzeug vorgesehener Hohlraum, die sogenannte Kavität, bestimmt hierbei die Form und Oberflächenstruktur des hergestellten Formteils.

Es lassen sich Formteile in exakter Weise mit feinen Strukturen herstellen. Insbesondere weist der Ampullenkörper an der Außenseite im Wesentlichen keinen Grat auf, im Gegensatz zu bekannte mittels Blow-Fill-Seal hergestellten Ampullen.

Dadurch, dass die Ampulle nicht wie bisher mittels eines Blow-Fill-Seal-Verfahrens hergestellt wird, sondern der Ampullenkörper mittels Kunststoffspritzgießen geformt wird, kann eine Ampulle mit vorteilhaften Eigenschaften hergestellt werden. Mittels Kunststoffspritzgießen kann der Ampullenkörper mit hoher Genauigkeit auch sehr dünnwandig hergestellt werden, so dass sich eine gute Kollabierbarkeit des Ampullenkörpers ergibt, die mit einem geringen Rückstellverhalten nach Entnahme einer Flüssigkeit einhergeht, so dass ein Rückpumpverhalten, sofern es überhaupt auftritt, zumindest reduziert ist.

Die Ampulle ist mehrteilig aufgebaut, indem das Anschlussteil als gesondertes Teil an den Ampullenkörper angesetzt ist. Der Ampullenkörper ist hierbei als Kunststoffspritzgussteil hergestellt, und ebenso kann auch das Anschlussteil mittels Kunststoffspritzgießen hergestellt sein, wobei das Anschlussteil und der Ampullenkörper jedoch als separate Teile ausgeführt sind und zum Bereitstellen der Ampulle das Anschlussteil an den Ampullenkörper angesetzt wird. In einem montierten Zustand kann das Anschlussteil dann beispielsweise formschlüssig an einem Hals des Ampullenkörpers gehalten sein, so dass das Anschlussteil fest mit dem Ampullenkörper verbunden und flüssigkeitsdicht an dem Ampullenkörper befestigt ist.

Das Anschlussteil weist in einer erfindungsgemäßen Ausgestaltung ein Gewindestück mit mindestens einem Gewindegang zum Herstellen einer Gewindeverbindung mit einer Entnahmeeinrichtung und ein an das Gewindestück anschließendes Abbrechstück auf.

Das Gewindestück kann beispielsweise einen Luer-Ansatz bereitstellen, mittels dessen das Anschlussteil nach Art eines sogenannten Luer-Locks mit einer Entnahmeeinrichtung, beispielsweise einer Spritze, verbunden werden kann. Die Entnahmeeinrichtung kann hierzu ein Anschlusselement in Form einer Überwurfmutter mit einem Innengewinde aufweisen, die mit dem Gewindestück in Gewindeeingriff gebracht werden kann, so dass über das Gewindestück die Entnahmeeinrichtung lösbar mit der Ampulle verbunden werden kann.

Das Abbrechstück dient dazu, in einem mit dem Gewindestück verbundenen Zustand eine Öffnung des Ampullenkörpers flüssigkeitsdicht zu verschließen. Zum Freigeben der Öffnung kann das Abbrechstück von dem Gewindestück entfernt, insbesondere abgebrochen werden, wobei hierzu zwischen dem Abbrechstück und dem Gewindestück eine definierte Sollbruchstelle vorgesehen sein kann, an der das Abbrechstück in definierter Weise von dem Gewindestück getrennt werden kann. Bei abgebrochenem Abbrechstück ist dann zum einen die Öffnung des Ampullenkörpers freigegeben, so dass auf eine Flüssigkeit in der Ampulle zugegriffen werden kann. Zum anderen kann das Gewindestück bei abgebrochenem Abbrechstück mit einer Entnahmeeinrichtung verbunden werden, so dass über die Entnahmeeinrichtung, beispielsweise eine Spritze, die Flüssigkeit aus der Ampulle entnommen werden kann.

Das Anschlussteil kann, wie gesagt, als gesondertes Teil ausgebildet und an einen Hals des Ampullenkörpers angesetzt sein. Um dabei einen Übergang zwischen dem Anschlussteil und dem Ampullenkörper flüssigkeitsdicht abzudichten, kann in einer erfindungsgemäßen Ausgestaltung ein Membranelement vorgesehen sein, das klemmend zwischen dem Anschlussteil und dem Ampullenkörper gehalten und vorzugsweise derart gestaltet ist, dass eine Flüssigkeitsentnahme aus der Ampulle im Wesentlichen nur mittels einer geeigneten Entnahmeeinrichtung möglich ist, nach Abbrechen des Abbrechstücks Flüssigkeit aber nicht ohne weiteres aus der Ampulle auslaufen kann. Insbesondere ist die Membran eine wiederverschließbare Membran. Das Membranelement kann beispielsweise nach Art eines Ventils eine Öffnung aufweisen, die sich bei Bereitstellen einer Saugkraft durch die Entnahmeeinrichtung öffnet und somit einen Flüssigkeitsaustritt aus der Ampulle in die Entnahmeeinrichtung, beispielsweise eine Spritze, ermöglicht, aber ohne Anliegen einer solchen Saugkraft geschlossen ist, so dass keine Flüssigkeit aus der Ampulle austreten kann. Als Alternative oder Ergänzung kann die Membran durch die Entnahmeeinrichtung, beispielsweise durch die Spitze einer nadelfreien Spritze, geöffnet werden, indem die Entnahmeeinrichtung die Membran zumindest abschnittsweise durchdringt und/oder die Entnahmeeinrichtung die Membran zumindest abschnittsweise verformt.

Der mittels Kunststoffspritzgießen hergestellte Ampullenkörper ist vorzugsweise dünnwandig ausgebildet und somit derart flexibel, dass er bei Entnahme einer medizinischen Flüssigkeit aus dem Ampullenkörper ohne weiteres, insbesondere ohne große Kraftwirkung, kollabieren kann. Aufgrund der Flexibilität und Kollabierbarkeit des Ampullenkörpers sind auch die an den Wandungen des Ampullenkörpers wirkenden Rückstellkräfte gering, so dass die Ampulle ein geringes Rückpumpverhalten aufweisen kann und damit das Risiko, dass eine entnommene Flüssigkeit zurück in die Ampulle gesogen wird, gering ist. In einer Ausgestaltung ist die Wandstärke (W1) der Wandungen des Ampullenkörpers kleiner oder gleich 0,5 mm.

Der Ampullenkörper ist als Kunststoffspritzgussteil hergestellt und trägt das Anschlussteil. An einer vom Anschlussteil abgewandten Seite kann der Ampullenkörper hierbei ein Bodenelement aufweisen, das beispielsweise als gesondertes Element an den Ampullenkörper, insbesondere mittels einer stoffschlüssigen Verbindung, angesetzt sein kann. Das Bodenelement kann in diesem Sinne beispielsweise als Folie ausgebildet sein, die mit dem Ampullenkörper verklebt oder verschweißt ist und somit den Ampullenkörper in seinem Bodenbereich flüssigkeitsdicht verschließt.

Dadurch, dass der Ampullenkörper durch ein gesondertes Bodenelement verschlossen wird, ist es möglich, Flüssigkeit vor dem Verschließen des Bodens über den Boden in den Ampullenkörper einzufüllen, um nach dem Einfüllen das Bodenelement, beispielsweise eine Folie, mit dem Ampullenkörper zu verbinden, insbesondere zu verkleben oder zu verschweißen. Alternativ ist zum Befüllen selbstverständlich auch möglich, den Boden des Ampullenkörpers zunächst mittels eines geeigneten Bodenelements, beispielsweise mittels einer Folie, zu verschließen, um erst anschließend den Ampullenkörper über eine Öffnung am mit dem Anschlussteil zu verbindenden Hals des Ampullenkörpers zu befüllen.

In einer anderen Variante kann das Bodenelement auch einstückig mit dem Ampullenkörper mittels Kunststoffspritzgießen und Kunststblasen hergestellt sein. Der Ampullenkörper wird somit zusammen mit seinem Bodenelement einstückig in einem geeigneten Kunststoffspritzgusswerkzeug gefertigt, so dass das nach dem Spritzgießen vorliegende Formteil einen Ampullenkörper bereitstellt, der bis auf eine Öffnung am Hals des Ampullenkörpers geschlossen ist und somit nach dem Befüllen durch Ansetzen des Anschlussteils in einfacher Weise komplettiert werden kann.

Das Bodenelement ist in einer vorteilhaften Ausgestaltung in den Ampullenkörper hinein gewölbt. Das Bodenelement weist somit eine Wölbung auf, die in das Innere des Ampullenkörpers hinein weist, so dass das Bodenelement gegenüber einem an das Bodenelement anschließenden äußeren Rand des Ampullenkörpers zumindest abschnittsweise zurückversetzt ist. Dies bewirkt, dass der Ampullenkörper eine hohe Standfestigkeit aufweisen kann, indem der Ampullenkörper insbesondere auf seinen unteren, äußeren Rand aufgestellt werden kann. Der untere äußere Rand des Ampullenkörpers stellt somit eine definierte Standfläche zur Verfügung, auf der der Ampullenkörper in standfester Weise stehen kann.

Im Bereich des unteren, äußeren Rands des Ampullenkörpers im Bereich des Bodenelements kann zudem auch ein Standring angebracht sein, der vom Ampullenkörper vorzugsweise radial nach außen, gegebenenfalls aber auch radial nach innen vorspringt und somit eine Standfläche unterseitig des Ampullenkörpers verbreitert. Über einen solchen Standring kann zudem eine zuverlässige Klebe- oder Schweißverbindung eines Bodenelements insbesondere in Form einer Folie mit dem Ampullenkörper hergestellt werden, wobei ein solcher Standring auch eine zuverlässige Anlage für ein Schweißwerkzeug bereitstellen kann, mittels dessen eine definierte Schweißung einer Folie an den Standring des Ampullenkörpers möglich wird.

In einer weiteren Ausgestaltung kann der Ampullenkörper auch eine Beschichtung aufweisen, die beispielsweise zum Bereitstellen einer Sauerstoffbarriere dient. Eine solche Beschichtung kann beispielsweise auf eine Innenseite oder eine Außenseite des Ampullenkörpers aufgebracht werden und kann beispielsweise unter Verwendung von Werkstoffen wie Metallocene, EVOH oder eines Oxydwerkstoffs (z.B. SiOx) hergestellt werden.

Anstelle eines Aufbringens einer Beschichtung auf den Ampullenkörper ist auch möglich, einen geeigneten Werkstoff, der eine gewünschte Barriere, insbesondere eine Sauerstoffbarriere bereitstellen kann, bereits in den Werkstoff des Ampullenkörpers einzubringen, so dass der mittels Kunststoffspritzgießen hergestellte Ampullenkörper selbst geeignete Barriereeigenschaften aufweist.

Alternativ hierzu ist auch möglich, eine Ampulle der hier beschriebenen Art in eine sauerstoffdichte Umverpackung einzubringen, so dass über eine solche Umverpackung beispielsweise eine Sauerstoffbarriere bereitgestellt wird.

Der Ampullenkörper ist in seiner Formgebung vorzugsweise so angepasst, dass er in günstiger Weise kollabieren kann. Hierzu kann der Ampullenkörper beispielsweise im Querschnitt die Form eines Schiffchens (so genannter "Ship-Shape"-Korpus) aufweisen, indem der Ampullenkörper in einem Mittelabschnitt im Querschnitt eine maximale Ampullenbreite aufweist, die sich ausgehend von dem Mittelabschnitt hin zu beiden Enden des Ampullenkörpers beidseits des Mittelabschnitts verjüngt, so dass der Ampullenkörper somit ausgehend vom Mittelabschnitt hin zu beiden Enden, vorzugsweise im Wesentlichen spitz, zuläuft. Dies entspricht in etwa der Form eines Schiffsrumpfs, daher der Begriff "Ship-Shape"-Korpus. Bezug genommen wird hier auf einen Querschnitt quer zu einer Ansetzrichtung, entlang derer das Anschlussteil an den Ampullenkörper angesetzt wird. Der Ampullenkörper ist vorzugsweise spiegelsymmetrisch zu zwei Spiegelsymmetrieebenen. Die Querschnittsebene des hier betrachteten Querschnitts liegt senkrecht zu den beiden Spiegelsymmetrieebenen.

In einer weiteren Ausführungsform der Ampulle besitzt der Ampullenkörper in einem Übergangsbereich zu dem Hals des Ampullenkörpers an wenigstens zwei gegenüberliegenden Seiten abgeschrägte Schultern. Vorzugsweise sind das die Seiten mit der längeren Erstreckung, welche die Ampullenweite E bereitstellen. Vorzugsweise besitzt der Ampullenkörper in dem Übergangsbereich zu dem Hals des Ampullenkörpers an allen vier Seiten abgeschrägte Schultern. Durch die Schultern wird die Kollabierbarkeit des Ampullenkörpers bei der Flüssigkeitsentnahme verbessert. Die Schultern erstrecken sich in einer Ausgestaltung unter einem Winkel von ca. 30° bis 60°, insbesondere von 40° bis 50°, zu jeweils einer Spiegelsymmetrieebene des Ampullenkörpers. Die Schultern werden insbesondere jeweils durch eine im Wesentlichen flache Ebene bereitgestellt.

In einer weiteren Ausführungsform weist die Ampulle in einem Mittelabschnitt des Ampullenkörpers in den zwei gegenüberliegenden, die Ampullenweite E bereitstellenden Seiten des Ampullenkörpers einen im Wesentlichen geraden Abschnitt auf. In einer Aufsicht auf die Unterseite des Ampullenkörpers sind die Seitenwände des Ampullenkörpers somit nicht vollständig gekrümmt über den gesamten Umfang des Ampullenkörpers. Die geraden Abschnitte erstrecken sich nicht über die gesamte Ampullenweite E. In der Höhe erstrecken sich die geraden Abschnitte vorzugsweise von dem Standring bis zu den Schultern. Dadurch wird die Kollabierbarkeit des Ampullenkörpers bei der Flüssigkeitsentnahme noch weiter verbessert. Der im Wesentlichen gerade oder gerade Abschnitt wird nachfolgend auch als Abflachung bezeichnet.

Erfindungsgemäße Ampullen haben vorzugsweise eine Größe für ein Aufnahmevolumen von bis zu etwa 30 ml. Sie können in unterschiedlichen Größen, beispielsweise mit einem Aufnahmevolumen von 5 ml, 10 ml, 20 ml oder 30 ml, vorliegen. Im Allgemeinen ist die Gesamthöhe H des Ampullenkörpers kleiner oder gleich 60 mm, ist die maximale Ampullenbreite D des Ampullenkörpers kleiner oder gleich 25 mm und/oder ist die maximale Ampullenweite E kleiner oder gleich 45 mm. Der Ampullenkörper ist in einer Aufsicht auf den Boden im Wesentlichen elliptisch. Die Ampullenweite E ist größer als die Ampullenbreite D. Vorzugsweise liegt das Verhältnis D/E in einem Bereich zwischen 0,33 und 7. Dies ist insbesondere vorteilhaft für die Standfestigkeit der Ampulle. Die erfindungsgemäße Ampulle besitzt ein gutes Oberflächen/Volumen-Verhältnis. Dies ist insbesondere wichtig für Haltbarkeit des in der Ampulle gelagerten Inhalts. In einer Ausgestaltung besitzt die Ampulle ein Oberflächen/Volumen-Verhältnis von kleiner als 50 cm⁻¹, bevorzugt von kleiner als 30 cm⁻¹, besonders bevorzugt von größer oder gleich 20 cm⁻¹ bis kleiner oder gleich 30 cm⁻¹.

Die Aufgabe wird auch gelöst durch ein Verfahren zum Herstellen einer Ampulle für eine medizinische Flüssigkeit. Die Ampulle weist dabei einen Ampullenkörper zum Aufnehmen einer medizinischen Flüssigkeit und ein Anschlussteil zum Anschließen einer Entnahmeeinrichtung an die Ampulle auf. Dabei ist vorgesehen, dass der Ampullenkörper als Kunststoffspritzgussteil mittels Kunststoffspritzgießen hergestellt wird.

Zu Vorteilen und vorteilhaften Ausgestaltungen soll auf das vorangehend zur Ampulle Beschriebene verwiesen werden, das analog auch auf das Verfahren Anwendung findet.

Der Ampullenkörper wird aus Kunststoff hergestellt, beispielsweise aus Polymeren oder Copolymeren oder auch synthetischem Gummi. Vorzugsweise ist der Kunststoff schweißbar. Beispielsweise kann der Ampullenkörper aus einem Polypropylen oder Polymethylen hergestellt sein, oder der Ampullenkörper kann aus einem Copolymer unter Verwendung von Monomeren wie Propylen, Ethylen, Buthylen, Butadien, Styren und/oder Isopren gefertigt sein.

Als Folie zum Verschließen eines Bodens des Ampullenkörpers kann beispielsweise eine schweißbare Folie zum Einsatz kommen. In einer Ausgestaltung basiert die Folie auf Homo-Polypropylen und/oder Co-Polypropylen mit Anteilen eines thermoplastischen Polymers, beispielsweise SEBS und/oder SIS. In einer Ausführungsform ist Folie mehrlagig.

Eine Membran zur Abdichtung eines Übergangs zwischen dem Anschlussteil und dem Ampullenkörper kann beispielsweise aus Polyisoprenen gefertigt sein.

Auch das Anschlussteil kann als Kunststoffspritzgussteil mittels Kunststoffspritzgießen hergestellt sein, wobei hierzu Kunststoffe wie Polymere und Copolymere zum Einsatz kommen können. Beispielsweise kann Polypropylen oder ein thermoplastisches Elastomer zum Einsatz kommen. Oder es kann ein Copolymer unter Verwendung von Monomeren wie Propylen, Ethylen, Buthylen, Butadien, Styren und/oder Isopren verwendet werden.

Der der Erfindung zugrunde liegende Gedanke soll nachfolgend anhand der in Figuren dargestellten Ausführungsbeispiele näher erläutert werden. Es zeigen:
- Fig. 1A: eine Ansicht einer Ampulle mit einem Ampullenkörper und einem Anschlussteil in einem getrennten Zustand;
- Fig. 1B: eine Ansicht der Ampulle bei an den Ampullenkörper angesetztem Anschlussteil;
- Fig. 2: eine Ansicht des Ampullenkörpers mit einem Bodenelement in Form einer Folie;
- Fig. 3A: eine Vorderansicht der Ampulle;
- Fig. 3B: eine Seitenansicht der Ampulle;
- Fig. 3C: eine Schnittansicht durch die Ampulle entlang der Linie A-A gemäß Fig. 3A;
- Fig. 4A: eine Ansicht eines Anschlussteils;
- Fig. 4B: eine Schnittansicht des Anschlussteils entlang der Linier B-B gemäß Fig. 4A;
- Fig. 5: eine Ansicht einer Entnahmeeinrichtung in Form einer Spritze vor Ansetzen an das Anschlussteil;
- Fig. 6A: eine perspektivische Ansicht eines Ampullenkörpers eines weiteren Ausführungsbeispiels einer Ampulle;
- Fig. 6B: eine perspektivische Ansicht des Ampullenkörpers gemäß Fig. 6A, schräg von unten;
- Fig. 7A: eine Schnittansicht des Ampullenkörpers entlang der Linie C-C gemäß Fig. 7B;
- Fig. 7B: eine Schnittansicht des Ampullenkörpers entlang der Linie D-D gemäß Fig. 7A; und
- Fig. 7C: eine Ansicht des Ampullenkörpers von oben.

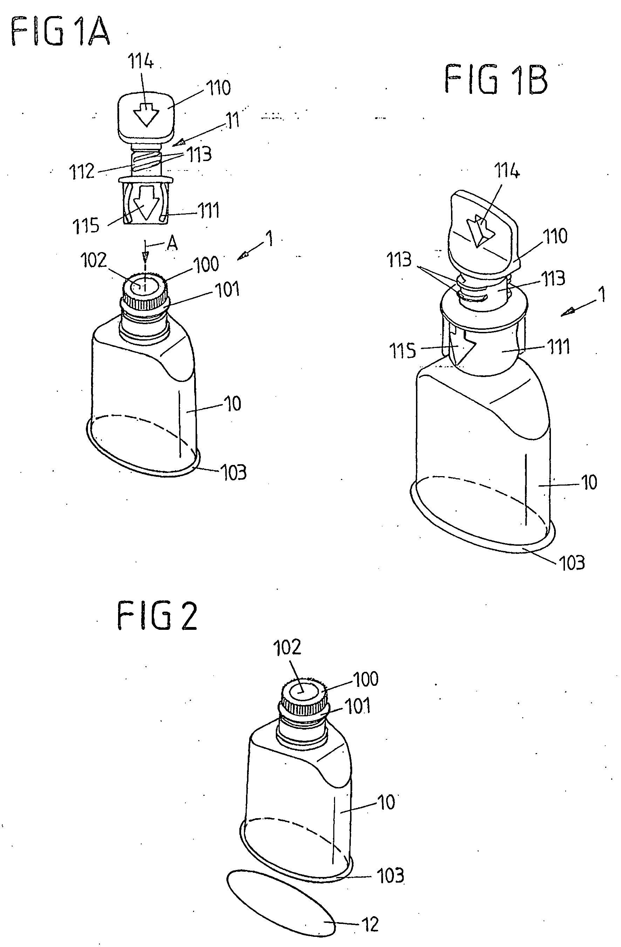

Fig. 1A, 1B bis 5 zeigen ein erstes Ausführungsbeispiel einer Ampulle 1 mit einem Ampullenkörper 10 zum Aufnehmen einer medizinischen Flüssigkeit und einem Anschlussteil 11 zum Bereitstellen eines Zugangs zum Inneren des Ampullenkörpers 10 und einer darin enthaltenen medizinischen Flüssigkeit.

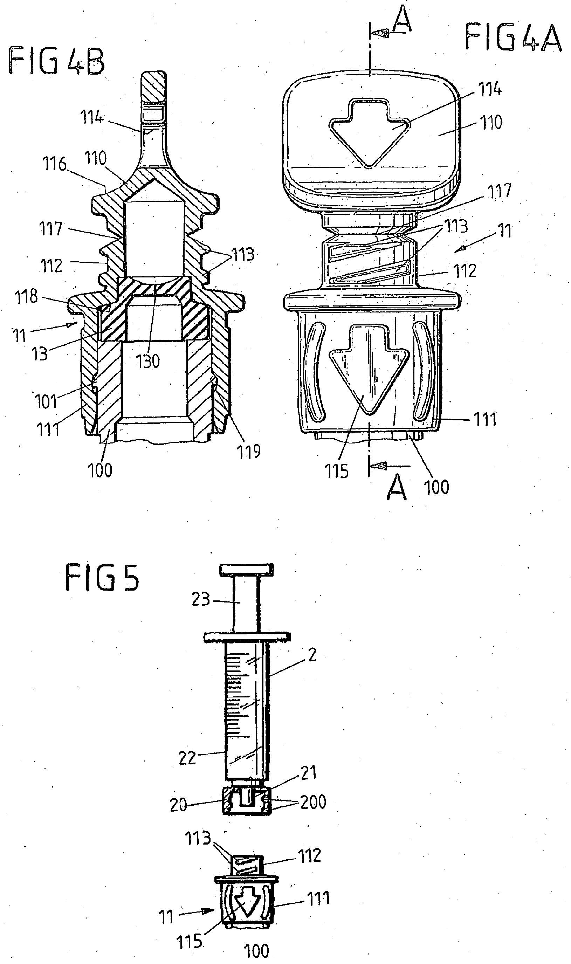

Der Ampullenkörper 10 weist einen Hals 100 mit einer Öffnung 102 und einem Rastvorsprung 101 auf. An den Hals 100 ist das Anschlussteil 11 mit einem Ansatzstück 111 anzusetzen, wobei in angesetztem Zustand (siehe zum Beispiel Fig. 1B und Fig. 4B) der Rastvorsprung 101 des Halses 100 formschlüssig in einen Rasteingriff 119 in Form einer rillenförmigen Vertiefung innenseitig des Ansatzstücks 111 eingreift.

An das Ansatzstück 111 des Anschlussteils 11 schließt ein Gewindestück 112 an, das zwei Gewindegänge 113 zur Bereitstellung eines Luer-Ansatzes trägt. Mit dem Gewindestück 112 ist über eine Sollbruchstelle 117 (siehe Fig. 4A) ein Abbrechstück 110 verbunden, das entlang der Sollbruchstelle 117 von dem Gewindestück 112 getrennt werden kann. Das Anschlussteil 11 ist mit seinem Ansatzstück 111, dem Gewindestück 112 und dem Abbrechstück 110 einstückig ausgebildet, wobei in einem Ausgangszustand das Abbrechstück 111 mit dem Gewindestück 112 verbunden ist und dadurch das Anschlussteil 11 in einem an den Hals 100 des Ampullenkörpers 10 angesetzten Zustand die Öffnung 102 des Ampullenkörpers 10 verschließt.

Zwischen dem Anschlussteil 11 und einer oberen Kante des Halses 100 ist, wie in Fig. 4B dargestellt, ein Membranelement 13 angeordnet, das klemmend zwischen dem Hals 100 und einem umlaufenden Anlageabschnitt 118 des Anschlussteils 11 gehalten ist und den Übergang zwischen dem Anschlussteil 11 und dem Hals 100 des Ampullenkörpers 10 flüssigkeitsdicht abdichtet.

Das Membranelement 13 weist eine Öffnung 130 auf, die nach Art eines Ventils in einem nicht belasteten Zustand, insbesondere dann, wenn keine Saugkraft zum Entnehmen der medizinischen Flüssigkeit aus dem Ampullenkörper 10 wirkt oder wenn sie nicht durchstoßen ist, die Öffnung 102 des Halses 100 verschließt, so dass bei abgebrochenem Abbrechstück 110 Flüssigkeit nicht ohne Weiteres aus dem Ampullenkörper 10 austreten kann.

Der Ampullenkörper 10 ist als Kunststoffspritzgussteil in einem geeigneten Spritzgusswerkzeug hergestellt. Der Ampullenkörper 10 ist hierbei dünnwandig ausgebildet und auch aufgrund seiner Formumgebung in vergleichsweise leichter Weise kollabierbar, so dass eine Flüssigkeit mittels einer geeigneten Entnahmeeinrichtung, beispielsweise einer in Fig. 5 dargestellten Spritze 2, ohne weiteres aus dem Ampullenkörper 10 entnommen werden kann.

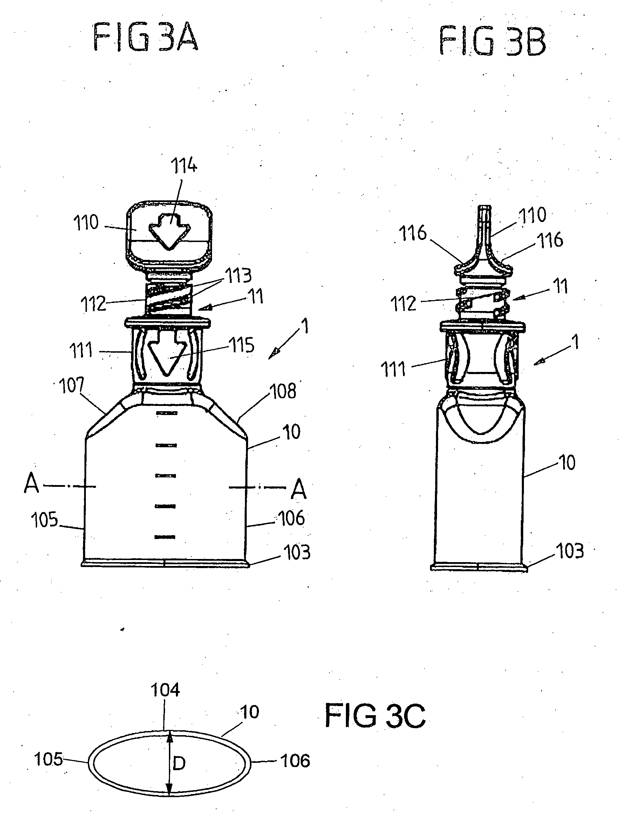

Der Ampullenkörper 10 ist spiegelsymmetrisch zu zwei Spiegelsymmetrieebenen, welche sich parallel zu den Bildebenen gemäß Fig. 3A und 3B erstrecken. Der Ampullenkörper 10 ist hier nach Art eines Schiffchens geformt. Das ist ein sogenannter "Ship-Shape"-Korpus. Hierunter ist zu verstehen, dass der Ampullenkörper 10, wie in Fig. 3C dargestellt, im Querschnitt quer zu seinen Spiegelsymmetrieebenen im Bereich eines Mittelabschnitts 104 eine maximale Ampullenbreite D aufweist und sich ausgehend von dem Mittelabschnitt 104 beidseits zu Enden 105, 106 hin derart verjüngt, dass er hin zu den Enden 105, 106 vergleichsweise spitz zuläuft. Die Enden 105, 106 sind, wie in den Figuren dargestellt, rund. Dadurch, dass der Ampullenkörper 10 zudem im Bereich seines Halses 100 abgeschrägte Schultern 107, 108 (siehe Fig. 3A) aufweist, können die Wandungen des Ampullenkörpers 10, ohne das hierfür große Kräfte aufgebracht werden müssten, kollabiert werden, was eine einfache, leichte Entnahme einer Flüssigkeit aus dem Ampullenkörper 10 mittels einer geeigneten Entnahmeeinrichtung 2 ermöglicht.

Bei dem Ausführungsbeispiel gemäß Fig. 1A, 1B bis 5 ist der Ampullenkörper 10 im Bereich seines Bodens durch ein Bodenelement 12 in Form einer Folie verschlossen. Das Bodenelement 12 wird als gesondertes Element an dem Ampullenkörper 10, beispielsweise mittels Kleben oder Schweißen, angebracht, wobei die Verbindung des folienförmigen Bodenelements 12 mit dem Ampullenkörper 10 über einen radial nach außen vorspringenden Standring 103 an der unteren, umlaufenden Kante des Ampullenkörpers 10 hergestellt wird.

Über den Standring 103 kann somit eine zuverlässige Verbindung des folienförmigen Bodenelements 12 mit dem Ampullenkörper 10 hergestellt werden. Zum anderen wird über den Standring 103 eine vorteilhafte Standsicherheit der Ampulle 1 erreicht, indem die Ampulle 1 auf ihrem Standring 103 vergleichsweise kippsicher stehen kann.

Zur Herstellung der Ampulle 1 werden zunächst der Ampullenkörper 10, das Anschlussteil 11 und das Bodenelement 12 getrennt voneinander gefertigt. Zum Befüllen kann zunächst das folienförmige Bodenelement 12 an dem Ampullenkörper 10 befestigt werden, um sodann eine medizinische Flüssigkeit über die Öffnung 102 im Hals 100 des Ampullenkörpers 10 in den Ampullenkörper 10 einzufüllen und den Ampullenkörper 10 anschließend durch Ansetzen des Anschlussteils 11 in eine Ansetzrichtung A (siehe Fig. 1A) an den Hals 100 flüssigkeitsdicht zu verschließen. Die Ampulle 1 kann sodann in geschlossenem Zustand bei erhöhter Temperatur, z.B. bei einer Temperatur über 100°C, sterilisiert werden, beispielsweise in einem Autoklaven.

Alternativ kann zum Befüllen auch zunächst das Anschlussteil 11 an den Hals 100 angesetzt werden, so dass das Anschlussteil 11 formschlüssig und flüssigkeitsdicht an dem Hals 100 gehalten ist, um den Ampullenkörper 10 dann über seinen Boden zu befüllen und erst anschließend den Boden durch Anbringen des folienförmigen Bodenelements 12 zu verschließen. Abschließend erfolgt eine Sterilisation, zum Beispiel in einem Autoklaven.

Das Anschlussteil 11 stellt mit seinem Gewindestück 112 einen Luer-Ansatz zur Herstellung einer Luer-Lock-Verbindung mit einer geeigneten Entnahmeeinrichtung 2 (siehe Fig. 5) bereit. Hierzu weist das Gewindestück 112 einen oder mehrere Gewindegänge 113 (im dargestellten Ausführungsbeispiel zwei Gewindegänge 113) auf, die bei abgebrochenem Abbrechstück 110 mit einem Anschlusselement 20 in Form einer Gewinderille 200 tragenden Überwurfmutter der Entnahmeeinrichtung 2 in Gewindeeingriff gebracht werden können.

Zum Entnehmen einer Flüssigkeit aus der Ampulle 1 greift ein Nutzer das Abbrechstück 110 zwischen zwei Fingern, wobei Griffbegrenzungen 116 den Griff hin zum Gewindestück 112 des Anschlussteils 11 begrenzen und somit verhindern, dass ein Nutzer beim Abbrechen des Abbrechstücks 110 das Gewindestück 112 und einen darüber geschaffenen Zugang zum Inneren des Ampullenkörpers 10 berühren kann. Das Abbrechstück 110 kann entlang der Sollbruchstelle 117, die durch eine gezielte, kerbenförmige Schwächung der Wandung zwischen dem Abbrechstück 110 und dem Gewindestück 112 gebildet ist, in definierter Weise abgebrochen werden, so dass nach Abbrechen des Abbrechstücks 110 die Entnahmeeinrichtung 2 in Form der Spritze mit ihrem Anschlusselement 20 an das Gewindestück 112 angesetzt und mit dem Gewindestück 112 in Gewindeeingriff gebracht werden kann. Dabei wird ein Spritzenkonus 21 in das Innere des Gewindestücks 112 eingeführt und gelangt dichtend mit dem Gewindestück 112 in Anlage. Durch Ausziehen eines Stempels 23 der Entnahmeeinrichtung 2 kann dann Flüssigkeit aus der Ampulle 1 in einen Spritzenkörper 22 der Entnahmeeinrichtung 2 eingesogen werden.

Durch Ausziehen des Stempels 23 kann an der Öffnung 102 eine Saugkraft zum Entnehmen der Flüssigkeit aus der Ampulle 1 bereitgestellt werden, die auch bewirkt, dass sich die Öffnung 130 des Membranelements 13 nach Art eines Ventils öffnet und somit Flüssigkeit das Membranelement 13 passieren kann. Als Alternative kann die Spritzenspitze die Membran auch durch Durchstoßen öffnen.

Am Abbrechstück 110 und am Ansatzstück 111 sind jeweils Anzeigeelemente in Form einer Aussparung (Anzeigeelement 114) oder in Form einer Erhebung (Anzeigeelement 115) in Form von Pfeilen angebracht. In den Figuren sind die Pfeile beispielhaft in Richtung auf den Ampullenkörper 10 dargestellt. Die Pfeile können aber auch in die entgegengesetzte Richtung zeigen, was aber in den Figuren nicht dargestellt ist.

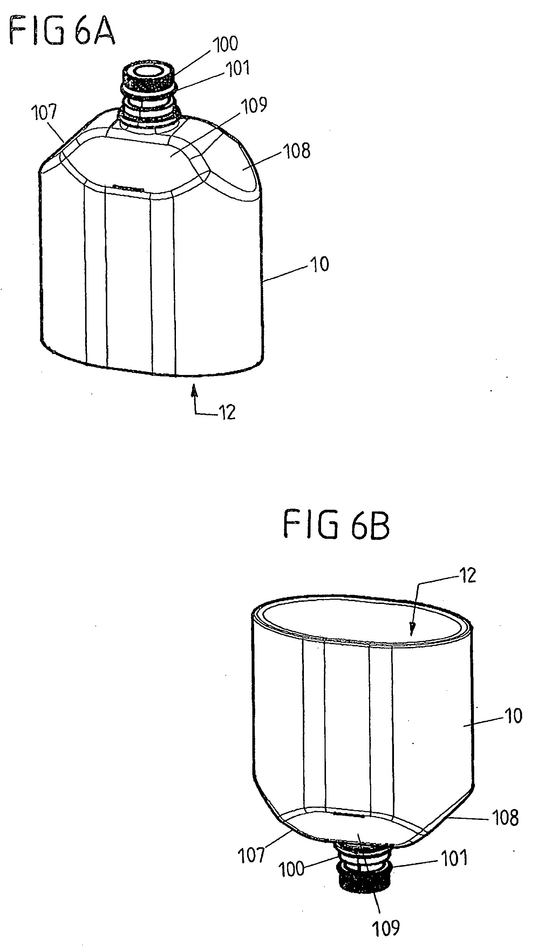

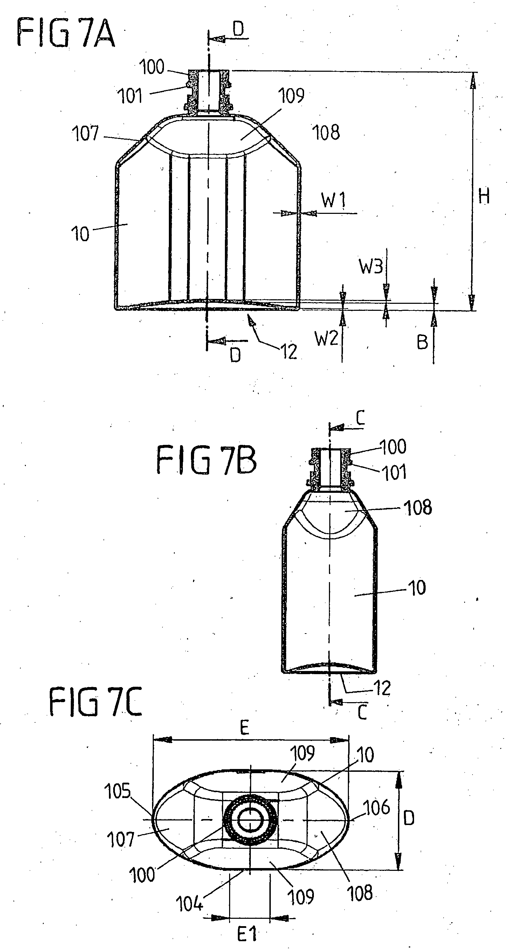

Bei einem weiteren, in Fig. 6A, 6B bis 7A, 7B, 7C dargestellten Ausführungsbeispiel ist der Ampullenkörper 10 mit dem Bodenelement 12 einstückig unter Verwendung eines Kunststoffspritzgussverfahrens hergestellt. Der Ampullenkörper 10 und das Bodenelement 12 werden somit einstückig im selben Spritzgusswerkzeug hergestellt, was einen zusätzlichen Herstellungsschritt zur Verbindung des Bodenelements 12 mit dem Ampullenkörper 10 erübrigt.

Wie aus den Schnittansichten gemäß Fig. 7A und 7B ersichtlich, ist das Bodenelement 12 in das Innere des Ampullenkörpers 10 hinein gewölbt, so dass am Übergang zwischen dem Bodenelement 12 und den Wandungen des Ampullenkörpers 10 ein Standring bereitgestellt wird, der eine Standfläche für einen zuverlässigen, vergleichsweise kippsicheren Stand des Ampullenkörpers 10 bereitstellt.

Der Ampullenkörper 10 ist ansonsten hinsichtlich seiner Formgebung und Funktion vergleichbar dem anhand von Fig. 1A, 1B bis 5 beschriebenen Ausführungsbeispiel, so dass auf die vorangehenden Erläuterungen verwiesen werden soll.

Der Ampullenkörper 10 des Ausführungsbeispiels gemäß Fig. 6A, 6B bis 7A, 7B, 7C wird zudem mit einem Anschlussteil 11 der anhand von Fig. 4A, 4B und 5 beschriebenen Art verbunden, so dass auch diesbezüglich zur Erläuterung auf das vorangehend Ausgeführte verwiesen werden soll.

Bei dem Ausführungsbeispiel gemäß Fig. 6A, 6B und 7A, 7B, 7C ist der Ampullenkörper 10 im Bereich seines Mittelabschnitts 104 abgeflacht, wie dies insbesondere aus der Draufsicht gemäß Fig. 7C ersichtlich ist. Zudem sind zusätzlich zu den Schultern 107, 108, die hin zum Hals 100 an die schmalseitigen Enden 105, 106 des Ampullenkörpers 10 anschließen, weitere Schultern 109 vorgesehen, mit denen der Ampullenkörper auch an seinen Breitseiten hin zum Hals 100 abschrägt ist. Mittels der Schultern 107, 108, 109 wird ein zum Hals 100 zulaufender Übergang von der Ship-Shape-Form des Ampullenkörpers 10 zum im Wesentlichen zylindrisch erstreckten Hals 100 geschaffen.

Die Schultern 107, 108, 109 leisten dabei auch einen Beitrag für eine vorteilhafte Kollabierbarkeit des Ampullenkörpers 10. Die Schultern 107,108, 109 erstrecken sich unter einem Winkel von ca. 30° bis 60°, z.B. ca. 45° zu jeweils einer Spiegelsymmetrieebene des Ampullenkörpers 10.

Ampullen 1 der hier beschriebenen Art können in unterschiedlichen Größen beispielsweise mit einem Aufnahmevolumen von 5 ml, 10 ml, 20 ml oder 30 ml vorliegen, wobei die Größe des Ampullenkörpers 10 entsprechend skaliert wird, ohne dass sich dessen Funktion und Formgebung dabei wesentlich ändert.

So kann bei einer Ampulle 1 mit einem Nennfassungsvermögen von 20 ml die Gesamthöhe H des Ampullenkörpers 10 (einschließlich des Halses 100, siehe Fig. 7A) beispielsweise zwischen 40 und 60 mm, vorzugsweise ca. 51,6 mm betragen. Die Halslänge H1 kann dabei ca. 9,5 mm sein. Die maximale Breite D kann beispielsweise zwischen 15 und 25 mm, z.B. ca. 20,5 mm betragen, während die Ampullenweite E (siehe Fig. 7C) zwischen 35 und 45 mm, beispielsweise bei ca. 38,4 mm liegt. Die Abflachung 104 kann eine Weite E1 zwischen 5 und 15 mm, beispielsweise 8,0 mm, aufweisen. Es ergibt sich eine zumindest näherungsweise elliptische Form des Ampullenkörpers 10 im Querschnitt gemäß Fig. 7C, die durch ein Verhältnis der Ampullenbreite D zur Ampullenweite E beschrieben werden kann. Das Verhältnis D/E kann z.B. in einem Bereich zwischen 0,33 und 0,7, beispielsweise bei ca. 0,53 liegen.

Die Wandungsstärke W1 (siehe Fig. 7A) der Wandungen des Ampullenkörpers 10 kann beispielsweise zwischen 0,2 und 0,5 mm, beispielsweise 0,3 mm betragen. Eine entsprechende Wandungsstärke W2 weist der Ampullenkörper 10 auch in seinem Übergangsbereich hin zum Boden 12 auf, wobei sich am Boden 12 die Wandungsstärke W3 hin zur Bodenmitte verstärken kann. In der Bodenmitte kann die Wandungsstärke W3 beispielsweise zwischen 0,3 und 0,7 mm, beispielsweise ca. 0,5 mm betragen. Die Höhe B der Bodenmitte über dem äußeren Ring des Ampullenkörpers 10 kann beispielsweise zwischen 1 und 2 mm, z.B. bei 1,6 mm liegen

Für Ampullen 1 mit einem anderen Nennfassungsvermögen können die Werte entsprechend skaliert sein. Dies ist in den nachstehenden Tabellen für Ampullen 1 mit einem Nennfassungsvermögen von 20 ml, 10 ml und 5 ml beispielhaft angegeben. Das Verhältnis von Ampullenbreite D zu Ampullenweite E ist dabei näherungsweise konstant.

| Nennfassungsvermögen | Höhe H [mm] | Halslänge H1 [mm] | Breite D [mm] | Weite E [mm] | Weite Abflachung E1 [mm] | Verhältnis D/E |
|---|---|---|---|---|---|---|
| 20 ml | 40-60 z.B. 51,6 | 9,5 | 15-25 z.B. 20,5 | 35-45 z.B. 38,4 | 5-15 z.B. 8,0 | 0,33-0,7 z.B. 0,53 |
| 10 ml | 30-50 z.B. 42,7 | 9,5 | 10-20 z.B. 16,6 | 25-35 z.B. 31,2 | 2-12 z.B. 6,5 | 0,3-0,8 z.B.0,53 |
| 5 ml | 25-45 z.B. 37,1 | 9,5 | 5-15 z.B. 12,8 | 20-30 z.B. 24,0 | 2-8 z.B. 5,0 | 0,2-0,8 z.B. 0,53 |

| Nennfassungsvermögen | Wandungsstärke W1 [mm] | Wandungsstärke W2 [mm] | Wandungsstärke W3 [mm] | Höhe B [mm] |
|---|---|---|---|---|
| 20 ml | 0,2-0,5 z.B. 0,3 | 0,2-0,5 z.B. 0,3 | 0,3-0,7 z.B. 0,5 | 1-2 z.B. 1,6 |
| 10 ml | 0,2-0,5 z.B. 0,3 | 0,2-0,5 z.B. 0,3 | 0,3-0,7 z.B. 0,5 | 0,8-1,8 z.B.1,3 |
| 5 ml | 0,2-0,5 z.B. 0,3 | 0,2-0,5 z.B. 0,3 | 0,3-0,7 z.B. 0,5 | 0,5-1,5 z.B. 1,0 |

Der Ampullenkörper 10 weist eine im Querschnitt im Wesentlichen elliptische Grundform auf, deren Verhältnis von Breite D zu Weite E ungleich 1 beträgt und insbesondere unabhängig von dem Nennfassungsvermögen zumindest näherungsweise konstant ist.

Ist ein nach außen vorstehender Standring 103 vorgesehen, wie beispielsweis bei dem Ausführungsbeispiel gemäß Fig. 1 bis 3, so kann dieser beispielsweise mit einem Überstand zwischen 0,5 und 1,5 mm, beispielsweise 0,7 mm nach außen hin vorstehen. Zusammen mit einer Wandungsstärke W1 von ca. 0,3 mm wird damit ein Standring einer Breite von beispielsweise ca. 1 mm beschaffen, der einen sicheren Stand und gegebenenfalls eine zuverlässige Verschweißung eines folienförmigen Bodenelements 12 ermöglicht.

Der der Erfindung zugrunde liegende Gedanke ist nicht auf die vorangehend geschilderten Ausführungsbeispiele beschränkt, sondern lässt sich auch in gänzlich anderer Weise verwirklichen.

Das Anschlussteil muss nicht notwendigerweise als Luer-Ansatz für eine Luer-Lock-Verbindung ausgebildet sein. Grundsätzlich sind auch Anschlüsse für andere Verbindungsarten möglich und denkbar.

Der Ampullenkörper sowie auch das Anschlussteil und das Bodenelement können grundsätzlich auch aus anderen Materialien als den in diesem Text angegebenen hergestellt sein. Insofern können alle Materialien zum Einsatz kommen, die zur Ausbildung eines Behältnisses für medizinische Flüssigkeiten geeignet sind.

Nach dem Befüllen des Ampullenkörpers und nach Anbringen des Anschlussteils sowie ggf. eines geeigneten Bodenelements kann die Ampulle sterilisiert werden. Dies kann beispielsweise bei Temperaturen jenseits 100 °C, beispielsweise bei 121 °C, bei geschlossener Ampulle erfolgen.

### Bezugszeichenliste

- 1: Ampulle
- 10: Ampullenkörper
- 100: Hals
- 101: Rastvorsprung
- 102: Öffnung
- 103: Standring
- 104: Mittelabschnitt oder Abflachung
- 105, 106: Ende
- 107, 108, 109: Schulter
- 11: Anschlussteil
- 110: Abbrechstück
- 111: Ansetzstück
- 112: Gewindestück
- 113: Gewindegänge
- 114, 115: Anzeigeelement
- 116: Griffbegrenzung
- 117: Sollbruchstelle
- 118: Anlageabschnitt
- 119: Rasteingriff
- 12: Bodenelement
- 13: Membranelement
- 130: Öffnung
- 2: Entnahmeeinrichtung (Spritze)
- 20: Anschlusselement
- 200: Gewinderillen
- 21: Spritzenkonus
- 22: Spritzenkörper
- 23: Stempel
- A: Ansetzrichtung
- B: Bodenhöhe
- D: Ampullenbreite
- E: Ampullenweite
- E1: Weite
- H: Höhe
- H1: Halslänge
- W1, W2, W3: Wandungsstärke

## Patentansprüche

1. Ampulle (1) für eine medizinische Flüssigkeit, mit
- einem Ampullenkörper (10) zum Aufnehmen einer medizinischen Flüssigkeit, wobei der Ampullenkörper (10) als Kunststoffspritzgussteil mittels Kunststoffspritzgießen hergestellt ist, **gekennzeichnet durch**
- ein Anschlussteil (11) zum Anschließen einer Entnahmeeinrichtung (2) an die Ampulle (1),
wobei die Ampulle (11) mehrteilig aufgebaut ist, indem das Anschlussteil (11) als gesondertes Teil an den Ampullenkörper (10) angesetzt ist, wobei das Anschlussteil (11) formschlüssig an einem Hals (100) des Ampullenkörpers (10) gehalten ist und zwischen dem Ampullenkörper (10) und dem Anschlussteil (11) ein Membranelement (13) zum Abdichten eines Übergangs zwischen dem Ampullenkörper (10) und dem Anschlussteil (11) angeordnet ist.

2. Ampulle (1) nach Anspruch 1, **dadurch gekennzeichnet, dass** das Anschlussteil (11) ein Gewindestück (112) mit mindestens einem Gewindegang (113) zum Herstellen einer Gewindeverbindung mit einer Entnahmeeinrichtung (2) und ein an das Gewindestück (112) anschließendes Abbrechstück (110) aufweist, wobei das Abbrechstück (110) in einem mit dem Gewindestück (112) verbundenen Zustand eine Öffnung (102) des Ampullenkörpers (10) verschließt und zum Freigeben der Öffnung (102) von dem Gewindestück (112) entfernbar ist.

3. Ampulle (1) nach Anspruch 1, **dadurch gekennzeichnet, dass** das Gewindestück (112) und das Abbrechstück (110) einstückig ausgebildet sind, wobei zwischen dem Gewindestück (112) und dem Abbrechstück (110) eine Sollbruchstelle (117) für ein Abbrechen des Abbrechstücks (110) von dem Gewindestück (112) angeordnet ist.

4. Ampulle (1) nach einem der vorangehenden Ansprüche, **dadurch gekennzeichnet, dass** der Ampullenkörper (10) derart flexibel ist, dass er bei Entnahme einer medizinischen Flüssigkeit aus dem Ampullenkörper (10) kollabierbar ist.

5. Ampulle (1) nach einem der Ansprüche 1 bis 4, **dadurch gekennzeichnet, dass** der Ampullenkörper (10) an einer vom Anschlussteil (11) abgewandten Seite ein Bodenelement (12) aufweist, das als gesondertes Element an den Ampullenkörper (10), vorzugsweise mittels einer stoffschlüssigen Verbindung, angesetzt ist.

6. Ampulle (1) nach Anspruch 5, **dadurch gekennzeichnet, dass** das Bodenelement (12) durch eine mit dem Ampullenkörper (10) verbundene, insbesondere mit dem Ampullenkörper (10) verklebte oder verschweißte Folie gebildet ist.

7. Ampulle (1) nach einem der Ansprüche 1 bis 4, **dadurch gekennzeichnet, dass** der Ampullenkörper (10) an einer vom Anschlussteil (11) abgewandten Seite ein Bodenelement (12) aufweist, das einstückig mit dem Ampullenkörper (10) mittels Kunststoffspitzgießen hergestellt ist.

8. Ampulle (1) nach einem der Ansprüche 5 bis 7, **dadurch gekennzeichnet, dass** das Bodenelement (12) in den Ampullenkörper (10) hinein gewölbt ist.

9. Ampulle (1) nach einem der vorangehenden Ansprüche, **dadurch gekennzeichnet, dass** der Ampullenkörper (10) an einer vom Anschlussteil (11) abgewandten Seite einen Standring (103) trägt, der vom Ampullenkörper (10) vorspringt.

10. Ampulle (1) nach einem der vorangehenden Ansprüche, **dadurch gekennzeichnet, dass** der Ampullenkörper (10) eine Beschichtung, insbesondere zum Bereitstellen einer Sauerstoffbarriere, aufweist.

11. Ampulle (1) nach einem der vorangehenden Ansprüche, **dadurch gekennzeichnet, dass** der Ampullenkörper (10), im Querschnitt quer zu einer Ansetzrichtung (A), entlang derer das Anschlussteil (11) an den Ampullenkörper (10) angesetzt ist, einen Mittelabschnitt (104) mit einer maximalen Ampullenbreite (D) aufweist, wobei sich die Ampullenbreite (D) ausgehend von dem Mittelabschnitt (104) hin zu Enden (105, 106) des Ampullenkörpers (10) beidseits des Mittelabschnitts (104) verjüngt.

12. Ampulle (1) nach einem der vorangehenden Ansprüche, **dadurch gekennzeichnet,**
**dass** der Ampullenkörper (10) in einem Übergangsbereich zu dem Hals (100) des Ampullenkörpers (10) an wenigstens zwei gegenüberliegenden Seiten abgeschrägte Schultern besitzt und/oder
**dass** in einem Mittelabschnitt des Ampullenkörpers (10) zwei gegenüberliegende, die Ampullenweite (E) bereitstellende Seiten des Ampullenkörpers (10) einen im Wesentlichen geraden Abschnitt aufweisen.

13. Verfahren zum Herstellen einer Ampulle (1) für eine medizinische Flüssigkeit, wobei die Ampulle (1)
einen Ampullenkörper (10) zum Aufnehmen einer medizinischen Flüssigkeit aufweist, der als Kunststoffspritzgussteil mittels Kunststoffspritzgießen hergestellt wird,
**dadurch gekennzeichnet,**
**dass** die Ampulle ein Anschlussteil (11) zum Anschließen einer Entnahmeeinrichtung (2) an die Ampulle (1) aufweist, wobei die Ampulle (1) mehrteilig aufgebaut ist, indem das Anschlussteil (11) als gesondertes Teil an den Ampullenkörper (10) angesetzt wird, wobei das Anschlussteil (11) formschlüssig an einem Hals (100) des Ampullenkörpers (10) gehalten ist und zwischen dem Ampullenkörper (10) und dem Anschlussteil (11) ein Membranelement (13) zum Abdichten eines Übergangs zwischen dem Ampullenkörper (10) und dem Anschlussteil (11) angeordnet ist.

## Claims

1. Ampoule (1) for a medical liquid, comprising
- an ampoule body (10) for receiving a medical liquid, wherein the ampoule body (10) is produced as a plastic injection-molded part by means of plastic injection molding, **characterized by**
- a connection part (11) for connecting a removal device (2) to the ampoule (1),
wherein the ampoule (1) is of a multi-part construction, with the connection part (11) being joined as a separate part to the ampoule body (10), with the connection part (11) being held with a form fit on a neck (100) of the ampoule body (10) and a membrane element (13) for sealing a transition between the ampoule body (10) and the connection part (10) being arranged between the ampoule body (10) and the connection part (11).

2. Ampoule (1) according to Claim 1, **characterized in that** the connection part (11) has a threaded segment (112) with at least one thread turn (113) for producing a threaded connection to a removal device (2) and has a break-off piece (110) connected to the threaded segment (112), wherein the break-off piece (110), in a state when connected to the threaded segment (112), closes an opening (102) of the ampoule body (10) and, in order to free the opening (102), is removable from the threaded segment (112).

3. Ampoule (1) according to Claim 1, **characterized in that** the threaded segment (112) and the break-off piece (110) are designed in one piece, wherein a predetermined breaking point (117) for breaking the break-off piece (110) from the threaded segment (112) is arranged between the threaded segment (112) and the break-off piece (110).

4. Ampoule (1) according to one of the preceding claims, **characterized in that** the ampoule body (10) is flexible, in such a way that it is collapsible when a medical liquid is removed from the ampoule body (10).

5. Ampoule (1) according to one of Claims 1 to 4, **characterized in that** the ampoule body (10) has, on a side facing way from the connection part (11), a base element (12) which, as a separate element, is joined to the ampoule body (10), preferably by means of a cohesively bonded connection.

6. Ampoule (1) according to Claim 5, **characterized in that** the base element (12) is formed by a film connected to the ampoule body (10), in particular by a film adhesively bonded or welded to the ampoule body (10).

7. Ampoule (1) according to one of Claims 1 to 4, **characterized in that** the ampoule body (10) has, on a side facing away from the connection part (11), a base element (12) which is produced in one piece with the ampoule body (10) by means of plastic injection molding.

8. Ampoule (1) according to one of Claims 5 to 7, **characterized in that** the base element (12) arches into the ampoule body (10).

9. Ampoule (1) according to one of the preceding claims, **characterized in that** the ampoule body (10) has, on a side facing away from the connection part (11), a stand ring (103) which protrudes from the ampoule body (10).

10. Ampoule (1) according to one of the preceding claims, **characterized in that** the ampoule body (10) has a coating, in particular for providing an oxygen barrier.

11. Ampoule (1) according to one of the preceding claims, **characterized in that** the ampoule body (10), in cross section transverse to an attachment direction (A) along which the connection part (11) is joined to the ampoule body (10), has a central portion (104) with a maximum ampoule breadth (D), wherein the ampoule breadth (D), starting from the central portion (104), narrows toward ends (105, 106) of the ampoule body (10) on both sides of the central portion (104).

12. Ampoule (1) according to one of the preceding claims, **characterized in that** the ampoule body (10), in a transition area to the neck (100) of the ampoule body (10), has beveled shoulders on at least two opposite sides, and/or **in that**, in a central portion of the ampoule body (10), two opposite sides of the ampoule body (10), which provide the ampoule width (E), have a substantially straight portion.

13. Method for producing an ampoule (1) for a medical liquid, wherein the ampoule (1) has an ampoule body (10) for receiving a medical liquid, which is produced as a plastic injection-molded part by means of plastic injection molding, **characterized in that**
the ampoule has a connection part (11) for connecting a removal device (2) to the ampoule (1), wherein the ampoule (1) is of a multi-part construction, with the connection part (11) being joined as a separate part to the ampoule body (10), with the connection part (11) being held with a form fit on a neck (100) of the ampoule body (10) and a membrane element (13) for sealing a transition between the ampoule body (10) and the connection part (10) being arranged between the ampoule body (10) and the connection part (11).

## Revendications

1. Ampoule (1) pour un liquide médical, comprenant :
- un corps d'ampoule (10) pour recevoir un liquide médical, le corps d'ampoule (10) étant fabriqué sous forme de pièce moulée par injection de plastique au moyen d'un moulage par injection de plastique, **caractérisée par**
- une partie de raccordement (11) pour le raccordement d'un dispositif de prélèvement (2) à l'ampoule (1),
l'ampoule (1) étant réalisée en plusieurs parties, par le fait que la partie de raccordement (11) est placée en tant que partie séparée sur le corps d'ampoule (10), la partie de raccordement (11) étant retenue par engagement par correspondance de formes au niveau d'un col (100) du corps d'ampoule (10) et un élément de membrane (13) étant disposé entre le corps d'ampoule (10) et la partie de raccordement (11) pour réaliser l'étanchéité d'une transition entre le corps d'ampoule (10) et la partie de raccordement (10).

2. Ampoule (1) selon la revendication 1, **caractérisée en ce que** la partie de raccordement (11) présente une pièce filetée (112) avec au moins un filet (113) pour créer une connexion filetée avec un dispositif de prélèvement (2) et une pièce de rupture (110) se raccordant à la pièce filetée (112), la pièce de rupture (110), dans un état connecté à la pièce filetée (112), fermant une ouverture (102) du corps d'ampoule (10) et pouvant être enlevée de la pièce filetée (112) pour libérer l'ouverture (102).

3. Ampoule (1) selon la revendication 1, **caractérisée en ce que** la pièce filetée (112) et la pièce de rupture (110) sont réalisées d'une seule pièce, une zone destinée à la rupture (117) pour rompre la pièce de rupture (110) de la pièce filetée (112) étant disposée entre la pièce filetée (112) et la pièce de rupture (110).

4. Ampoule (1) selon l'une quelconque des revendications précédentes, **caractérisée en ce que** le corps d'ampoule (10) est flexible de telle sorte qu'il puisse être affaissé lors du prélèvement d'un liquide médical hors du corps d'ampoule (10).

5. Ampoule (1) selon l'une quelconque des revendications 1 à 4, **caractérisée en ce que** le corps d'ampoule (10) présente, au niveau d'un côté opposé à la pièce de raccordement (11), un élément de fond (12) qui est placé en tant qu'élément séparé sur le corps d'ampoule (10), de préférence au moyen d'une connexion par engagement par liaison de matière.

6. Ampoule (1) selon la revendication 5, **caractérisée en ce que** l'élément de fond (12) est formé par un film connecté au corps d'ampoule (10), en particulier collé ou soudé au corps d'ampoule (10).

7. Ampoule (1) selon l'une quelconque des revendications 1 à 4, **caractérisée en ce que** le corps d'ampoule (10) présente au niveau d'un côté opposé à la partie de raccordement (11) un élément de fond (12) qui est réalisé d'une seule pièce avec le corps d'ampoule (10) au moyen d'un moulage par injection de plastique.

8. Ampoule (1) selon l'une quelconque des revendications 5 à 7, **caractérisée en ce que** l'élément de fond (12) est cintré à l'intérieur du corps d'ampoule (10).

9. Ampoule (1) selon l'une quelconque des revendications précédentes, **caractérisée en ce que** le corps d'ampoule (10) porte au niveau d'un côté opposé à la partie de raccordement (11) un anneau de maintien (103) qui fait saillie depuis le corps d'ampoule (10).

10. Ampoule (1) selon l'une quelconque des revendications précédentes, **caractérisée en ce que** le corps d'ampoule (10) présente un revêtement, en particulier pour fournir une barrière à l'oxygène.

11. Ampoule (1) selon l'une quelconque des revendications précédentes, **caractérisée en ce que** le corps d'ampoule (10), en coupe transversale transversalement à une direction de pose (A), le long de laquelle la partie de raccordement (11) est placée sur le corps d'ampoule (10), présente une portion centrale (104) avec une largeur d'ampoule maximale (D), la largeur d'ampoule (D) se rétrécissant depuis la portion centrale (104) vers les extrémités (105, 106) du corps d'ampoule (10) des deux côté de la portion centrale (104).

12. Ampoule (1) selon l'une quelconque des revendications précédentes, **caractérisée en ce que** le corps d'ampoule (10), dans une région de transition au col (100) du corps d'ampoule (10), possède des épaulements biseautés au niveau d'au moins deux côtés opposés, et/ou
**en ce que** dans une portion centrale du corps d'ampoule (10), deux côtés opposés du corps d'ampoule (10), constituant la largeur de l'ampoule (E), présentent une portion essentiellement droite.

13. Procédé de fabrication d'une ampoule (1) pour un liquide médical, l'ampoule (1) présentant un corps d'ampoule (10) pour recevoir un liquide médical, qui est fabriqué sous forme de pièce moulée par injection de plastique au moyen d'un moulage par injection de plastique,
**caractérisé en ce que**
l'ampoule présente une partie de raccordement (11) pour le raccordement d'un dispositif de prélèvement (2) à l'ampoule (1), l'ampoule (1) étant réalisée en plusieurs parties, par le fait que la partie de raccordement (11) est placée en tant que partie séparée sur le corps d'ampoule (10), la partie de raccordement (11) étant retenue par engagement par correspondance de formes au niveau d'un col (100) du corps d'ampoule (10) et un élément de membrane (13) étant disposé entre le corps d'ampoule (10) et la partie de raccordement (11) pour réaliser l'étanchéité d'une transition entre le corps d'ampoule (10) et la partie de raccordement (10).
